Europäisches Patentamt

European Patent Office

Office européen des brevets

(19)

(11) Veröffentlichungsnummer: **0 454 660 A1**

(12)

# EUROPÄISCHE PATENTANMELDUNG

(21) Anmeldenummer: 91890084.6

(22) Anmeldetag: 23.04.91

(51) Int. Cl.$^5$: **C04B 28/32, C04B 9/02**

(30) Priorität: 23.04.90 AT 940/90

(43) Veröffentlichungstag der Anmeldung:
30.10.91 Patentblatt 91/44

(84) Benannte Vertragsstaaten:
AT DE DK ES FR GB GR IT NL

(71) Anmelder: MAGINDAG Steirische
Magnesit-Industrie Aktiengesellschaft
Fleschgasse 34
A-1130 Wien (AT)

(72) Erfinder: Birkner, Friedrich, Dr.
Sierning Nr. 33
A-3384 Gross (AT)

(74) Vertreter: Haffner, Thomas M., Dr. et al
Patentanwaltskanzlei Dipl.-Ing. Adolf
Kretschmer Dr. Thomas M. Haffner
Schottengasse 3a
A-1014 Wien (AT)

(54) **Wasserbeständige und abriebfeste Sorelzementzusammensetzung für Fussböden sowie Verfahren zum Herstellen eines derartigen Fussbodens.**

(57)   Bei einer wasserbeständigen und abriebfesten Sorelzementzusammensetzung für Fußböden oder Fahrbahnoberflächen auf der Basis von Gemischen von MgO, $MgCl_2$ und anorganischen Füllstoffen, wie z.B. Sand, Kies, Asche od.dgl. werden bezogen auf MgO, 0,5 bis 20 Gew.-% eines wasserlöslichen Kunstharzes, insbesondere einer Polycarbonsäure, zugesetzt.

EP 0 454 660 A1

Die Erfindung bezieht sich auf eine wasserbeständige und abriebfeste Sorelzementzusammensetzung für Fußböden oder Fahrbahnoberflächen auf der Basis von Gemischen von MgO, MgCl$_2$ und anorganischen Füllstoffen, wie z.B. Sand, Kies, Asche od.dgl. sowie auf ein Verfahren zum Herstellen eines derartigen wasserbeständigen und abriebfesten Fußbodens bzw. einer Fahrbahnoberfläche.

Sorelzement ist eine Bezeichnung für verschiedene Massen, die als Grundbestandteile Magnesia (MgO) und Magnesiumchlorid (MgCl$_2$) in einer wäßrigen Lösung enthalten. Im gehärteten Zustand liegen diese Grundbestandteile von Sorelmassen in Form von Magnesiumoxidchloridhydrat vor. Sorelzement wird härter und bindet rascher ab als Portlandzement, hat jedoch nur beschränkte Wasserfestigkeit. Die Magnesiumoxidchloridhydrat-Kristalle, die den wesentlichen Bestandteil des Sorelzementes bilden, weisen starke strukturelle Ähnlichkeit mit Gips auf. Zwischen den Kristallen kommt es zu keiner echten Bindung, und die physikalischen Eigenschaften des Zements hängen von der Durchdringung der Kristalle untereinander ab. Durch Wasser wird die Haftung zwischen den Kristallen praktisch beseitigt.

Um Sorelzementmassen wasserbeständiger zu machen, wurde bereits vorgeschlagen, durch Zusatz von Phosphaten und Aluminaten unlösliche Magnesiumsalze zu bilden. Derartige Zusätze führen allerdings zu einer Abnahme der Härtungsgeschwindigkeit. Es ist weiters bekannt, Sorelzementmassen durch eine Reihe von Füllstoffen wasserfester zu machen. Aus der DE-PS 29 22 815 ist es bekanntgeworden, Ethylsilicat und Glasfasern der Masse zuzusetzen, wobei eine spezielle Vorgangsweise für die Aushärtung vorgeschlagen wird. Gemäß dieser DE-PS 29 22 815 wird als Kristallkeimbildner eine Vorgemischmasse in einer kristallkeimbildenden Menge, die ein Reaktionsprodukt aus Wasser, Magnesiumoxid und gegebenenfalls Magnesiumchlorid umfaßt, eingesetzt. Das Magnesiumoxid ist hiebei in der Magnesiumchloridlösung löslich, und aus einer übersättigten Lösung von MgO fällt in der Folge Mg(OCl)$_2$ aus. Je nach Geschwindigkeit der Fällung entsteht eine mehr oder minder nadelige Kristallstruktur, welche zu einer Verfilzung der Struktur führt. Es ist bekannt, daß Zusätze von Kieselsäure und von Ammoniumphosphat die Wasserlöslichkeit herabsetzen.

Gemäß einem älteren Vorschlag der Anmelderin (österreichische Anmeldung A 2221/89) wurde bereits versucht, die Festigkeitswerte derartiger Sorelzementmischungen unabhängig von den Witterungsbedingungen zu verbessern, wobei der Zusatz von anorganischen Kationenaustauschern vorgeschlagen wurde. Ein Zusatz derartiger Kationenaustauscher führt gemäß dem älteren Vorschlag zur Abnahme der Konzentration an Magnesiumionen in der Lösung und in der Folge zur Entstehung einer weitgehend homogenen, härtenden Masse mit höherer Druckfestigkeit. Die Erhöhung der Druckfestigkeit wird beim Einsatz von Kationenaustauschern in erster Linie darauf zurückgeführt, daß durch die verzögerte Kristallisation durch Abnahme der Magnesiumionenkonzentrationen in der Lösung viele Kristallisationskeime entstehen und in der Folge überaus kleine Nadeln ausgefällt werden, wodurch eine dichtere Struktur erzielt wird. Durch Einsatz bestimmter anorganischer Kationenaustauscher, wie beispielsweise von Gulsenit oder Zeolith wurde hiebei eine wesentlich geringere Quellung nach einer längeren Lagerung in Wasser festgestellt, als bei herkömmlichen Sorelzementzusammensetzungen.

Sorelzementzusammensetzungen für Fußböden oder Fahrbahnoberflächen neigen ähnlich wie Estriche beim Aushärten aufgrund der Schwindung zur Rißbildung. Die durch Zusatz von Kationenaustauschern erzielte Verringerung der Quellung ist in erster Linie nach der Aushärtung unter Einwirkung von Wasser von Bedeutung, da eine geringe Quellung dazu führt, daß die Festigkeitswerte, insbesondere die Abriebfestigkeit, erhalten bleiben.

Die Erfindung zielt nun darauf ab, eine wasserbeständige und abriebfeste Sorelzementzusammensetzung für Fußböden oder Fahrbahnoberflächen der eingangs genannten Art zu schaffen, welche sich gegenüber bekannten Sorelzementzusammensetzungen durch höhere Abriebfestigkeit und wesentlich verringerte Neigung zur Rißbildung beim Aushärten auszeichnet und gleichzeitig eine verbesserte Wasserbeständigkeit besitzt. Zur Lösung dieser Aufgabe besteht die Erfindung im wesentlichen darin, daß der Sorelzementzusammensetzung der eingangs genannten Art bezogen auf MgO, 0,5 bis 20 Gew.-% eines wasserlöslichen, polymeren oder polykondensierten Kunstharzes, insbesondere einer Polycarbonsäure, zugesetzt werden. Die Verwendung derartiger wasserlöslicher, polymerer oder polykondensierter Kunstharze bringt hiebei den Vorteil mit sich, daß eine Schwindung beim Aushärten nicht mehr auftritt, so daß eine Rißbildung in dem Boden mit Sicherheit vermieden wird. Die wasserlöslichen, polymeren oder polykondensierten Kunstharze stellen hiebei nach dem Trocknen bzw. Aushärten der Sorelzementzusammensetzung eine hydrophobe Komponente dar, welche dem Eindringen von Wasser in einen derartigen Fußboden oder eine derartige Fahrbahnoberfläche entgegenwirkt. Ein Grund für die Verbesserung der Druckfestigkeits-und Biegefestigkeitswerte derartiger Sorelzusammensetzungen dürfte hiebei im Falle der Verwendung von Polycarbonsäuren zusätzlich darin zu suchen sein, daß auch Polycarbonsäuren ähnlich den bereits vorgeschlagenen Kationenaustauschern Magnesiumsalze zumindest teilweise abbinden, wobei die Verbindungen aus den Magnesiumionen und den Carboxylationen der Polycarbonsäuren zu einer besonders stabilen Verbindung führen, und darüberhinaus durch Entzug von Magnesiumionen das Gleichgewicht der Lösung verlagert wird und das Ausmaß der Übersättigung der Lösung an Chloridionen zunimmt. Die Verwendung wasserlöslicher, polymerer oder polykondensierter Kunstharze stellt hiebei eine gute Mischbarkeit mit den übrigen Komponenten des Fußbodens bzw. der Fahrbahnoberfläche sicher, so daß eine bessere Homogenisierung und damit eine gleichmäßige Festigkeit über den gesamten Querschnitt des Fußbodens bzw. der Fahrbahnoberfläche nach dem Aushärten sichergestellt ist. Durch Verwendung von 0,5 bis 20 Gew.-% bezogen auf MgO eines derartigen wasserlöslichen, polymeren oder polykondensierten Kunstharzes, insbesondere einer Polycarbonsäure, konnten besonders hohe Endfestigkeiten und eine besonders hohe Biegefestigkeit und damit Bruchfestigkeit der Fußböden bzw. Fahrbahnoberflächen erzielt werden. Der Zusatz von Mengen über 5 Gew.-% einer Polycarbonsäure führt hiebei gleichzeitig zu einem rascheren Aushärten, da die Abbindung in diesen Fällen durch die Erwärmung der Masse beschleunigt wird.

Das erfindungsgemäße Verfahren zur Herstellung eines derartigen wasserbeständigen und abriebfesten Fußbodens bzw. einer Fahrbahnoberfläche ist im wesentlichen dadurch gekennzeichnet, daß als wasserlösliches, polymeres oder polykondensiertes Runstharz Gemische von Polycarbonsäuren eingesetzt werden, wobei wenigstens 25 Gew.-% der eingesetzten Polycarbonsäure einen Erweichungspunkt von über 80°C aufweisen. Insbesondere die Beimengung eines bestimmten Mindestanteiles von 25 Gew.-% an Polycarbonsäuren mit einem Erweichungspunkt von über 80°C ist für die Homogenisierung des Gemisches besonders vorteilhaft, da bei einem derartigen Gehalt an Polycarbonsäuren mit dem genannten Mindesterweichungspunkt die gleichzeitige Vermahlung von Magnesiumoxid mit den beigemengten Polycarbonsäuren in einfachen Mühlen gelingt. Mit Vorteil wird erfindungsgemäß so vorgegangen, daß die Polycarbonsäuren mit dem MgO auf eine Korngröße von kleiner 1 mm, insbesondere kleiner 0,2 mm, gemahlen werden, wodurch eine hinreichend rasche Umsetzung bzw. Abbindung der Sorelzementmischung gewährleiset ist, wobei vorzugsweise MgO mit einer spezifischen Oberfläche von $5 m^2/g$ eingesetzt wird.

Eine durch einfaches Rühren leicht homogenisierbare Mischung läßt sich dann erzielen, wenn Polycarbonsäuren in wässriger Lösung mit einem Festkörperanteil von 25-35 Gew.-%, vorzugsweise 30 Gew.-%, eingesetzt werden, wobei mit Vorteil so vorgegangen wird, daß MgO gemeinsam mit den Polycarbonsäuren in Wasser aufgeschlämmt wird und in eine MgCl2-Lösung eingerührt wird, worauf das Gemisch nach dem Zusetzen der Füllstoffe innerhalb von drei Stunden, vorzugsweise einer Stunde, durch Gießen aufgetragen wird.

Für Fußböden wird in der Regel mit relativ feinkörnigen Füllstoffen, wie z.B. Sand, gearbeitet wohingegen für Fahrbahnoberflächen, insbesondere für abriebfeste, um die Rutschgefahr vermindernde Fahrbahnoberflächen zu erhalten entsprechend grobkörnigere Zuschläge wie beispielsweise Kies, Asche od.dgl. gewählt werden können.

Die Erfindung wird nachfolgend an Hand eines Ausführungsbeispieles näher erläutert.

Beispiel:

Aus einem Sorelzement nach dem Stand der Technik bestehend aus 500g MgO einer Reinheit von von 75 %, 1500g Quarzsand und 390ml einer MgCl2-Lösung mit 30°Bé wurden Normquader mit einer Grundfläche von 4 x 4 cm gegossen.

In einer Versuchsserie wurde ein Teil des Quarzsandes schrittweise durch eine Polycarbonsäure, mit einem pH-Wert von etwa 8 und einer Säurezahl von 220 mg KOH/g, ersetzt. Die maximal zugesetzte Menge an Polycarbonsäure betrug hiebei 200 g, was 40 Gew.-% der eingesetzten MgO-Menge entspricht.

In einer zweiten Versuchsserie wurden schrittweise 200 g des Quarzsandes durch eine geeignete Menge einer wässrigen Lösung einer Polycarbonsäure mit einem pH-Wert von etwa 8 und einer Viskosität von etwa 3 Pa.s bei 20°C ersetzt.

Auch aus den hiebei gebildeten Sorelzementmischungen wurden Normquader hergestellt, und in der Folge wurde die Wasserbeständigkeit aller hergestellten Mischungen untersucht. Zur Bestimmung der Wasserbeständigkeit wurden die Quader 33 Tage lang in Wasser gelagert, wobei das Wasser täglich erneuert wurde. Nach Ablauf der Versuchszeit wurden von allen Versuchskörpern der Schwund bzw. die Quellung in Prozent, die Biegezugfestigkeit von sowohl den im Klimaraum gelagerten Prüfkörpern als auch den in Wasser gelagerten Prüfkörpern und die Druckfestigkeit von sowohl den im Klimaraum gelagerten als auch den im Wasser gelagerten Prüfkörpern bestimmt.

Die Ergebnisse dieser Untersuchung sind in der in der Zeichnung dargestellten Figur gezeigt. In dieser zeigen: Fig. 1 die Quellung der Prüfkörper, Fig. 2 die Biegezugfestigkeitswerte der Prüfkörper, von sowohl im trockenen Zustand als auch nach Lagerung in Wasser, und Fig. 3 die Druckfestigkeit der Prüfkörper, von sowohl im trockenen Zustand als auch nach Lagerung in Wasser.

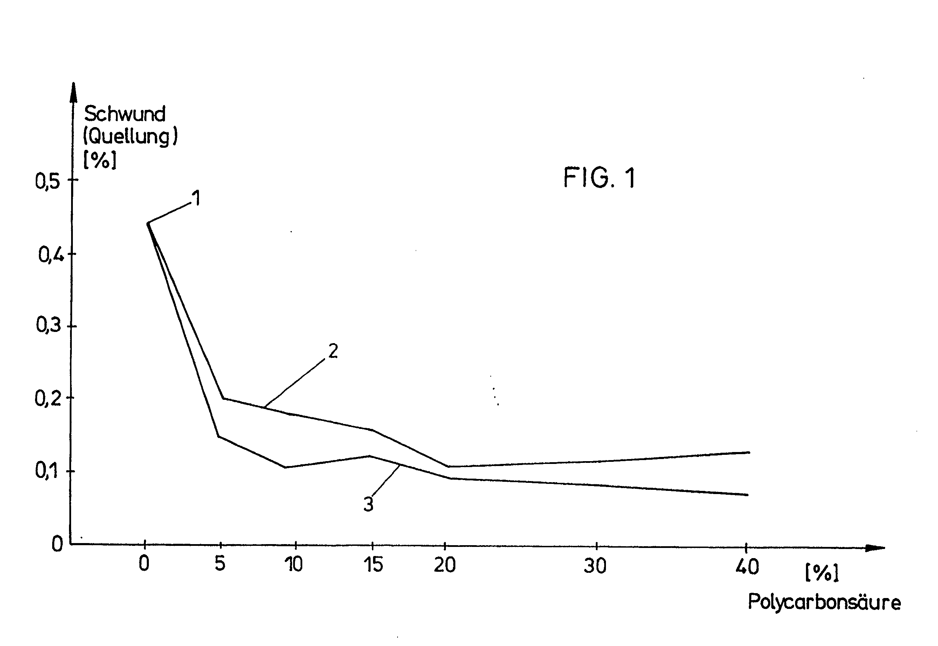

In Fig. 1 sind die Quellungswerte der Probekörper, welche 33 Tage in Wasser gelagert wurden, dargestellt. Hiebei ist mit 1 die Quellung der Probekörper dargestellt, bei welchen nur Quarzsand als Zuschlagstoff enthalten ist. Diese Probekörper zeigen eine Quellung von 0,44%. Kurve 2 zeigt hiebei die Quellungswerte von Probekörpern, in welchen zu dem Quarzsand schrittweise gemahlene Polycarbonsäure zugesetzt wurde. Hiebei zeigte es sich, daß bereits bei einem Zusatz von 25 g Polycarbonsäure zu dem Quarzsand, das entspricht 5 Gew.-% der eingesetzten MgO Menge, nur mehr eine Quellung von 0,2 beobachtet werden konnte. Die geringste Quellung der Sorelzementzusammensetzung wurde bei einem Zusatz von 100g Polycarbonsäure, das entspricht 20 Gew.-% der eingesetzten MgO Menge, mit einem Wert von 0,11 beobachtet, worauf bei einem weiteren Zusatz der Polycarbonsäure (150 bis 200g) die Quellungswerte wiederum geringfügig auf Werte von 0,12 bzw. 0,13 anstiegen.

Kurve 3 zeigt die Quellungswerte von Probekörpern, bei welchen dem Quarzsand schrittweise geeignete Mengen einer wässrigen Polycarbonsäurelösung zugesetzt wurde. Bei Zusatz 100 ml der Polycarbonsäurelösung wurde nur mehr eine Quellung von 0,15 beobachtet. Der optimale Wert der Quellung wurde bei Zusatz von 400 ml der wässrigen Polycarbonsäurelösung mit einem Wert von 0,09 erreicht. Ein weiterer Zusatz an Polycarbonsäure führt zwar noch zu einem geringfügigen Absinken der Quellungswerte, jedoch kann keine deutliche Verbesserung mehr beobachtet werden.

Insgesamt ergibt sich, daß ein Polycarbonsäurezusatz, welcher 20 Gew.-% der Menge des eingesetzten MgO entspricht, zu einer deutlichen Verringerung der Quellung der Sorelzementzusammensetzung führt, wobei noch größere Mengen an eingesetzter Polycarbonsäure keine oder nur eine äußerst geringfügige Verbesserung des Quellverhaltens der Normquader bei Lagerung in Wasser mehr ergeben.

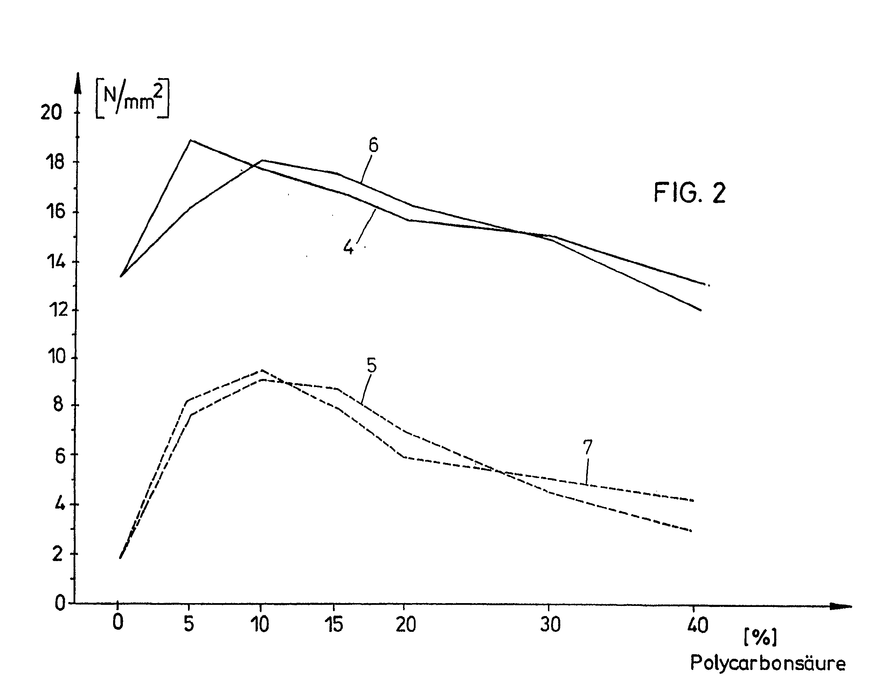

Fig. 2 zeigt die Biegezugfestigkeiten der verschiedenen Sorelzementzusammensetzungen von sowohl im trockenen Zustand als auch nach Lagerung in Wasser. Ein Sorelzement, welchem als Füllstoff lediglich Quarzsand zugemischt wurde, erreicht im trockenen Zustand eine Biegezugfestigkeit von etwa 13,36 N/mm². Im nassen Zustand sinkt die Biegezugfestigkeit nach einer Einweichdauer von 33 Tagen bei täglichem Wasserwechsel auf 1,8 N/mm². Bei Zusatz von gemahlener Polycarbonsäure in Mengen bis zu 40 Gew.-% der Menge an MgO steigt die Biegezugfestigkeit, wie dies der Kurve 4 zu entnehmen ist, in trockenem Zustand bei Zusatz von 25 g gemahlener Polycarbonsäure (das sind 5 Gew.-% der Menge an MgO) auf einen Wert von 18,37 an, worauf die Biegezugfestigkeit bei weiterem Polycarbonsäurezusatz langsam absinkt und bei Zusatz einer Menge Polycarbonsäure die 39 Gew.-% der eingesetzten MgO Menge beträgt, den gleichen Wert aufweist wie die Sorelzusammensetzung, welche lediglich durch Zusatz von Quarzsand erhalten wurde.

Nach einer Wasserlagerung von 33 Tagen zeigt die Sorelzementzusammensetzung, welcher gemahlene Polycarbonsäure zugesetzt wurde, entsprechend der Kurve 5 ihre höchste Biegezugfestigkeit bei Zusatz von 50 g Polycarbonsäure mit einem Wert von 9,0 N/mm². Bei einem weiteren Zusatz von gemahlener Polycarbonsäure bleibt die Biegezugfestigkeit bis zu einem Zusatz von 75 g Polycarbonsäure (das entspricht 15 Gew.-% der eingesetzten MgO Menge) im wesentlichen konstant und sinkt dann langsam ab, wobei jedoch die Biegezugfestigkeit auch bei Zusatz von 200 g Quarzsand durch Polycarbonsäure noch über dem Wert, welcher für die Sorelzementzusammensetzung, welche nur mit Quarzsand als Füllstoff hergestellt wurde, lag.

Der Zusatz einer wässrigen Polycarbonsäurelösung zu dem Quarzsand ergibt im trockenen Zustand keine so hohen Biegezugfestigkeiten (Max 18,09 N/mm²), jedoch sinken die Biegezugfestigkeitswerte bei größeren Mengen zugesetzter Polycarbonsäurelösung nicht so stark ab, wie dies im Falle des Zusatzes von gemahlener Polycarbonsäure beobachtet wurde. Nach Lagerung in Wasser wurden bei Zusatz von 200 ml einer wässrigen Polycarbonsäurelösung etwas höhere Biegezugfestigkeitswerte (9,3 N/mm²) als bei Zusatz der gemahlenen Polycarbonsäure erhalten, jedoch sanken die Werte bis zu einem Zusatz von 540 ml Polycarbonsäurelösung unter jene der Kurve 5 ab. Diese Differenzen lassen sich sowohl auf die unterschiedlichen eingesetzten Polycarbonsäuren als auch eine unterschiedlich homogene Verteilung der Polycarbonsäuren in der Sorelzementzusammensetzung zurückführen.

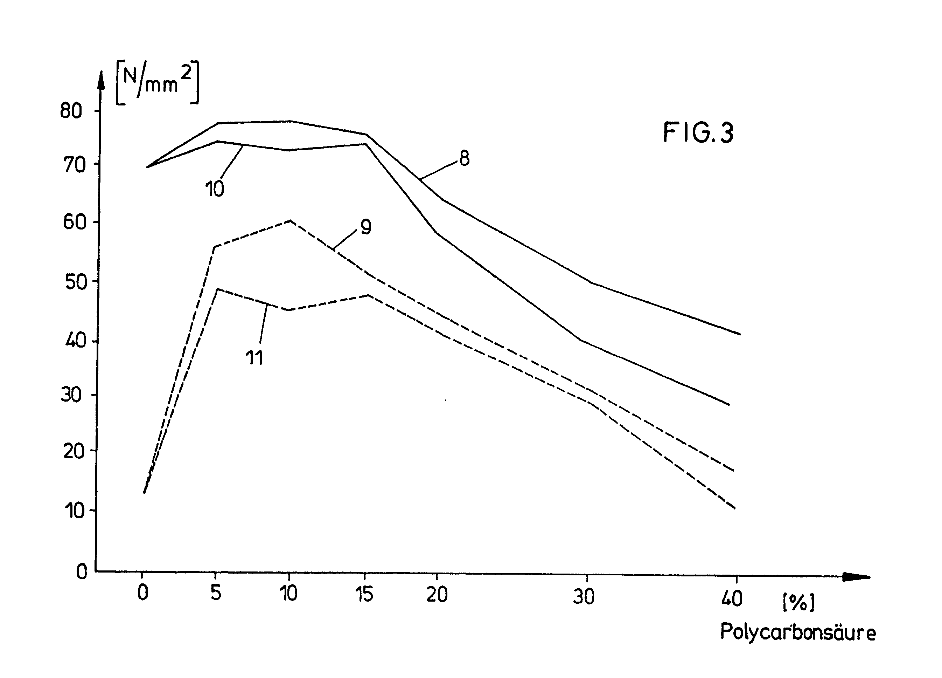

Fig. 3 zeigt die Druckfestigkeit der verschiedenen Sorelzementzusammensetzungen. Eine Sorelzementzusammensetzung, welche als Füllstoff lediglich Quarzsand enthält, weist im trockenen Zustand eine Druckfestigkeit von 69,2 N/mm² auf und nach 33-tägiger Lagerung in Wasser eine Druckfestigkeit von 14,2 N/mm². Die Kurven 8 und 10 zeigen jeweils die Druckfestigkeiten von Sorelzementzusammensetzungen, in welchen dem Quarzsand gemahlene Polycarbonsäure bzw. eine wässrige Polycarbonsäurelösung zugesetzt wurde. Hiebei werden bei Zusatz von 25 bis 75 g gemahlene Polycarbonsäure bzw. eine entsprechende Menge einer wässrigen Polycarbonsäurelösung (100-300ml) Druckfestigkeiten im Bereich von 76-78 N/mm² für den Fall des Zusatzes von gemahlener Polycarbonsäure und von 73-75 N/mm² für den Fall des Zusatzes von wässriger Polycarbonsäurelösung erhalten. Bei weiterem Zusatz von Polycarbonsäure sinkt die Druckfestigkeit relativ stark ab. Bedeutend günstigere Druckfestigkeiten werden nach einer 33-tägigen Lagerung in Wasser erzielt, wenn dem Quarzsand gemahlene Polycarbonsäure zugesetzt wird (Kurve 9). Hiebei werden im günstigsten Falle, bei Zusatz von 25-50 Quarzsand, Druckfestigkeiten im Bereich von 60 N/mm² erzielt. Bei einem weiteren Zusatz von gemahlener Polycarbonsäure sinkt die Druckfestigkeit wiederum stark ab, bleibt jedoch auch bei einem Zusatz von 200 g Polycarbonsäure über dem für eine Sorelzementzusammensetzung ohne Polycarbonsäure erhaltenen Wert von 14,2 N/mm².

Die Kurve 11 zeigt die Verhältnisse bei dem Zusatz einer wässrigen Polycarbonsäurelösung zu dem Quarzsand nach Lagerung im Wasser. Hiebei werden in Übereinstimmung zu den Werten der Biegezugfestigkeit wiederum nicht ganz so hohe Werte, wie im Falle des Zusatzes von gemahlener Polycarbonsäure, erzielt, jedoch zeigt sich, daß die Werte bis zu einem Zusatz von 300 ml der wässrigen Polycarbonsäurelösung zu dem Quarzsand nahezu konstant bleiben, worauf die Druckfestigkeit relativ stark abfällt.

Insgesamt ergibt sich somit, daß bei Zusatz von Polycarbonsäuren zu dem Quarzsand, sowohl eine geringere Quellung der Sorelzementzusammensetzung bei Lagerung in Wasser auftritt als auch bedeutend bessere Biegezugfestigkeiten und Druckfestigkeiten der Mischung, sowohl im trockenen als auch im nassen Zustand erreicht werden können.

mit den Polycarbonsäuren in Wasser aufgeschlämmt wird und in eine übersättigte $MgCl_2$-Lösung eingerührt wird, worauf das Gemisch nach dem Zusetzen der Füllstoffe innerhalb von drei Stunden, vorzugsweise einer Stunde, durch Gießen aufgetragen wird.

## Patentansprüche

1. Wasserbeständige und abriebfeste Sorelzementzusammensetzung für Fußböden oder Fahrbahnoberflächen auf der Basis von Gemischen von MgO, $MgCl_2$ und anorganischen Füllstoffen, wie z.B. Sand, Kies, Asche od.dgl., dadurch gekennzeichnet, daß bezogen auf MgO, 0,5 bis 20 Gew.-% eines wasserlöslichen, polymeren oder polykondensierten Kunstharzes, insbesondere einer Polycarbonsäure, zugesetzt werden.

2. Verfahren zum Herstellen eines wasserbeständigen und abriebfesten Fußbodens bzw. einer Fahrbahnoberfläche nach Anspruch 1, dadurch gekennzeichnet, daß als wasserlösliches, polymeres oder polykondensiertes Kunstharz Gemische von Polycarbonsäuren eingesetzt werden, wobei wenigstens 25 Gew.-% der eingesetzten Polycarbonsäure einen Erweichungspunkt von über 80°C aufweisen.

3. Verfahren nach Anspruch 2, dadurch gekennzeichnet, daß die Polycarbonsäuren mit dem MgO auf eine Korngröße von kleiner 1 mm, insbesondere kleiner 0,2 mm, gemahlen werden.

4. Verfahren nach Anspruch 2 oder 3, dadurch gekennzeichnet, daß Polycarbonsäuren in wässriger Lösung mit einem Festkörperanteil von 25-35 Gew.-%, vorzugsweise 30 Gew.-%, eingesetzt werden.

5. Verfahren nach einem der Ansprüche 2, 3 oder 4, dadurch gekennzeichnet, daß MgO mit einer spezifischen Oberfläche von $5m^2/g$ eingesetzt wird.

6. Verfahren nach einem der Ansprüche 2 bis 5, dadurch gekennzeichnet, daß MgO gemeinsam

FIG. 1

FIG. 2

$\left[\dfrac{N}{mm^2}\right]$

Polycarbonsäure [%]

EP 0 454 660 A1

FIG.3

EP 0 454 660 A1

**Europäisches Patentamt**

## EUROPÄISCHER RECHERCHENBERICHT

Nummer der Anmeldung

| | EINSCHLÄGIGE DOKUMENTE | | | EP 91890084.6 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl⁵) |
| X | US - A - 4 786 328 (WEILL et al.) * Ansprüche; Spalte 3, Zeilen 26-40 * | | 1,2,4, 6 | C 04 B 28/32 C 04 B 9/02 |
| | -- | | | |
| X | DE - C1 - 3 832 287 (DURAPLAN INDUSTRIEFUSSBÖDEN RICHARD BÖHL) * Gesamt * | | 1,2,4, 6 | |
| | -- | | | |
| X | US - A - 3 816 148 (BARTHEL) * Gesamt * | | 1 | |
| | ---- | | | |
| | | | | **RECHERCHIERTE SACHGEBIETE (Int. Cl⁵)** |
| | | | | C 04 B |

Der vorliegende Recherchenbericht wurde für alle Patentansprüche erstellt.

| Recherchenort | Abschlußdatum der Recherche | Prüfer |
|---|---|---|
| WIEN | 08-08-1991 | BECK |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82